Europäisches Patentamt

European Patent Office

Office européen des brevets

(11) Veröffentlichungsnummer: **0 283 576**
**B1**

(12) **EUROPÄISCHE PATENTSCHRIFT**

(45) Veröffentlichungstag der Patentschrift: **06.02.91**

(21) Anmeldenummer: **87118475.0**

(22) Anmeldetag: **14.12.87**

(51) Int. Cl.⁵: **B 60 K 15/00, F 02 M 37/00**

(54) Verschlussvorrichtung für eine Lüftungsleitung eines Kraftstoffbehälters.

(30) Priorität: **26.03.87 DE 3709925**

(43) Veröffentlichungstag der Anmeldung:
**28.09.88 Patentblatt 88/39**

(45) Bekanntmachung des Hinweises auf die
Patenterteilung:
**06.02.91 Patentblatt 91/06**

(84) Benannte Vertragsstaaten:
**DE ES FR GB IT SE**

(56) Entgegenhaltungen:
**EP-A-0 037 514**
**DE-B-2 503 731**
**FR-A- 544 427**
**US-A-3 994 360**

**MACHINE DESIGN, Band 29, Nr. 24, 28.**
**November 1957, Seite 99;**

(73) Patentinhaber: **Dr.Ing.h.c. F. Porsche**
**Aktiengesellschaft**
**Porschestrasse 42**
**D-7000 Stuttgart 40 (DE)**

(72) Erfinder: **Hempel, Ulrich, Dipl.-Ing. (FH)**
**Kirchstrasse 7**
**D-7253 Renningen (DE)**
Erfinder: **Österle, Josef, Dipl.-Ing. (FH)**
**Riegestrasse 8**
**D-7901 Rammingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Verschlußvorrichtung für eine Lüftungsleitung eines Kraftstoffbehälters gemäß dem Oberbegriff des Patentanspruchs 1.

Die EP-A 37 514 zeigt eine Verschlußvorrichtung für eine Lüftungsleitung eines Kraftstoffbehälters, die ein Gehäuse mit einem Zugang und einem Austritt sowie eine Schließeinrichtung umfaßt und in Abhängigkeit von der Fahrzeuglage betätigt wird, wobei die Schließeinrichtung aus einem Masseteil und einem mit diesem zusammenwirkenden Schließteil besteht, das eine Austrittsöffnung bei Schräglage des Fahrzeuges verschließt.

Innerhalb des Gehäuses sind zwei übereinanderliegende Kammern vorgesehen, die über die Austrittsöffnung miteinander verbunden sind. In der einen Kammer ist das Masseteil und in der anderen Kammer ist das Schließteil in gewissem Umfang frei beweglich angeordnet. Zwischen dem Masseteil und dem Schließteil erstreckt sich ein stabartiges Verbindungsglied, welches die Austrittsöffnung durchdringt und abschnittsweise in beide Kammern hineinragt.

Bei der EP-A 37 514 sind die beiden Kammern und die Austrittsöffnung an einen federbelasteten Ventilkörper ausgebildet, der in das Gehäuse eingesetzt ist.

Bei einer weiteren bekannten Verschlußvorrichtung (DE-PS 25 03 731) ist innerhalb des Gehäuses eine sich von unten nach oben erweiternde, kegelförmige Kammer vorgesehen, in der ein Masseteil und ein auf der oberen Fläche des Masseteils liegendes Schließteil angeordnet sind. Bei Schräglage oder Kopflage des Fahrzeuges gleitet das Masseteil entlang einer Führungswand des Gehäuses und drückt das Schließteil in die Austrittsöffnung, wodurch kein Kraftstoff mehr durch die Austrittsöffnung austreten kann.

In der Praxis hat sich gezeigt, daß bei extremen Bedingungen, z.B. (hohe Außentemperaturen und/oder große Höhenlagen) im Fahrbetrieb ein verstärktes Vergasen des Kraftstoffes auftritt, wodurch ein erhöhter Gasstrom vom Kraftstoffbehälter in die Lüftungsleitung und die Verschlußvorrichtung strömt. Durch diesen Gasstrom und gegebenenfalls durch Erschütterungen im Fahrbetrieb kann das Schließteil nach oben gegen die Austrittsöffnung gedrückt werden und verschließt diese, was eine Druckerhöhung innerhalb der Verschlußvorrichtung und im Kraftstoffbehältersystem zur Folge hat. Die Druckerhöhung bewirkt, daß das Schließteil selbst bei Normallage des Fahrzeuges in der Austrittsöffnung hängenbleibt, so daß eine einwandfreie Beund Entlüftung des Kraftstoffbehälters nicht mehr gegeben ist.

Aufgabe der Erfindung ist es, eine Verschlußvorrichtung zu schaffen, die auch bei einem verstärkten Vergasen des Kraftstoffes eine gute Funktion aufweist.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Ausbildung des Gehäuses und der Schließeinrichtung eine Verschlußvorrichtung geschaffen wird, die sowohl bei hohen Außentemperaturen als auch bei großen Höhenlagen und in sämtlichen Fahrzeugstellungen eine einwandfreie Funktion aufweist. Durch die obenliegende Anordnung des Masseteils, das über ein Verbindungsglied mit dem Schließteil zusammenwirkt, wird erreicht, daß das Schließteil auch bei einer starken Vergasung des Kraftstoffes nicht gegen die Austrittsöffnung hochgedrückt wird.

Die an der oberen Kammer angeordneten Führungsrippen nehmen das in gewissem Umfang freibewegliche Masseteil auf, wobei sich zwischen den Führungsrippen Durchströmkanäle erstrecken, durch die bei geöffneter Austrittsöffnung die Kraftstoffdämpfe hindurchtreten können. Die an der unteren Kammer vorgesehenen sternförmigen Rippen sorgen dafür, daß die der Austrittsöffnung vorgelagerte Dichtfläche nicht durch das Verbindungsglied zwischen Schließteil und Masseteil beschädigt wird. In Schräglage oder Kopflage des Fahrzeuges gleitet das Masseteil entlang den Führungsrippen und zieht das Schließteil gegen die Austrittsöffnung.

In der Zeichnung ist ein Ausführungsbeispiel der Erfindung näher erläutert.

Es zeigt

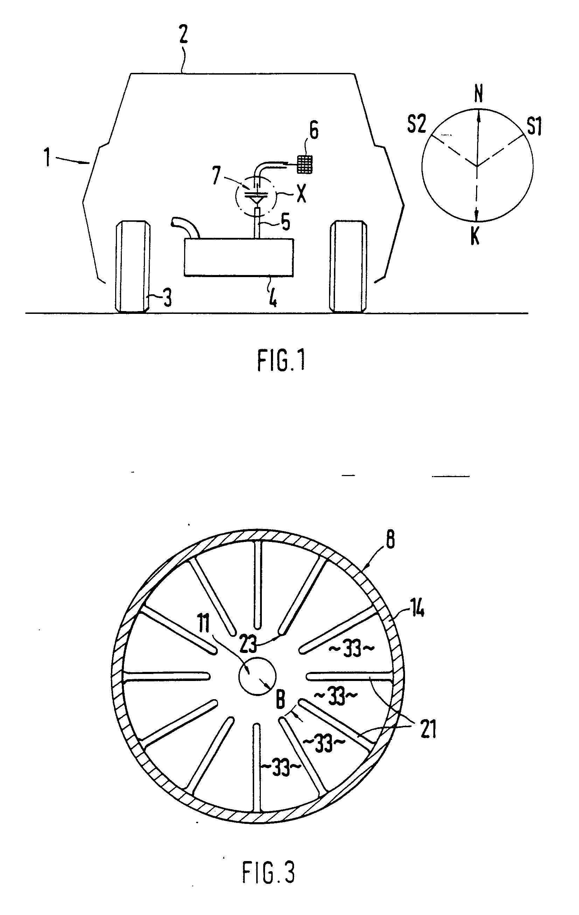

Fig. 1 eine schematische Darstellung eines Kraftfahrzeuges,

Fig. 2 eine Einzelheit X der Fig. 1 im Schnitt und größerem Maßstab,

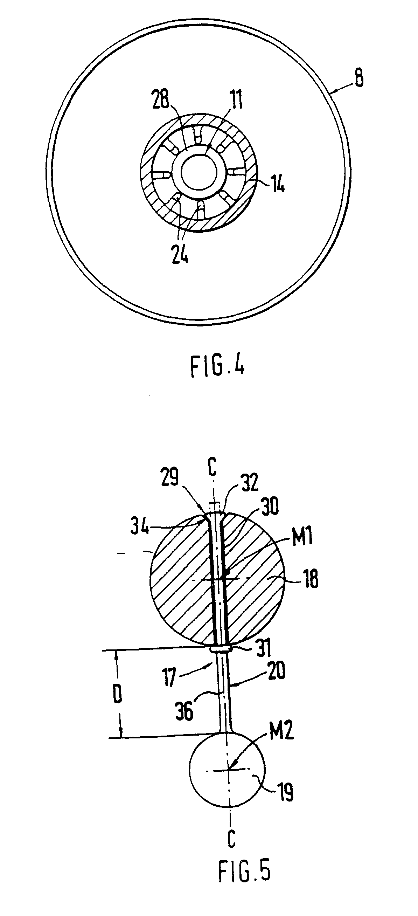

Fig. 3 einen Schnitt nach der Linie III-III der Fig. 2,

Fig. 4 einen Schnitt nach der Linie IV-IV der Fig. 2,

Fig. 5 einen Schnitt durch die erfindungsgemäße Schließeinrichtung.

Das Kraftfahrzeug 1 umfaßt einen Aufbau 2, der von Rädern 3 getragen wird. Innerhalb des Aufbaus 2 ist ein Kraftstoffbehälter 4 vorgesehen, der eine Lüftungsleitung 5 zur Ent- bzw. Belüftung desselben aufweist. Der Lüftungsleitung 5 ist ein Aktivkohlefilter 6 nachgeschaltet, durch den ein Austreten von umweltschädlichen Kraftstoffdämpfen in die Atmosphäre vermieden wird. Darüber hinaus weist die Lüftungsleitung 5 außerhalb des Kraftstoffbehälters 4 eine Verschlußvorrichtung 7 auf, die sicherstellt, daß bei Normallage N des Kraftfahrzeugs 1 der Kraftstoffbehälter 4 entlüftet wird und bei Seitenanlage S1 und S2 bzw. Kopflage K kein Kraftstoff ins Freie bzw. in den Aktivkohlefilter 6 austritt.

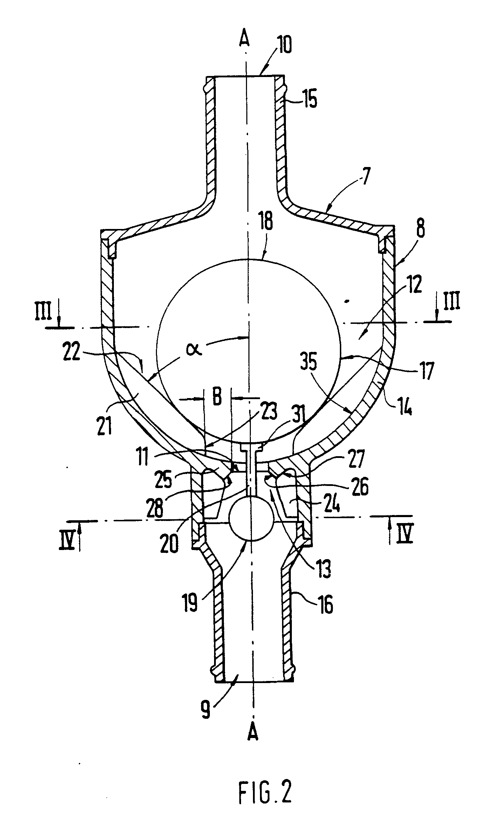

Die Verschlußvorrichtung 7 umfaßt ein Gehäuse 8, an dem ein Zugang 9, ein Austritt 10 sowie eine Austrittsöffnung 11 vorgesehen sind (Fig. 2). Die Austrittsöffnung 11 ist im Verbindungsbereich von zwei übereinanderliegenden Kammern 12, 13 des Gehäuses 8 angeordnet und erstreckt sich etwa in einem mittleren Bereich zwischen dem Zugang 9 und dem Austritt 10.

Das vorzugsweise aus Kunststoff gefertigte Gehäuse 8 ist mehrteilig ausgebildet und setzt sich entsprechend Fig. 2 aus einem Mittelteil 14, einem Oberteil 15 und einem Unterteil 16 zusammen. Die einzelnen Teile des Gehäuses 8 sind beispielsweise durch Reibschweißen miteinander verbunden. Innerhalb des Gehäuses 8 ist eine Schließeinrichtung 17 angeordnet, die aus einem Masseteil 18, einem Schließteil 19 und einem Verbindungsglied 20 besteht, wobei das Masseteil 18 mit Abstand D zum Schließteil 19 verläuft (Fig. 5). Das stabförmige Verbindungsglied 20 ist an seinem Ende mit dem Masseteil 18 und an seinem anderen Ende mit dem Schließteil 19 fest verbunden. Das Verbindungsglied 20 durchdringt die Austrittsöffnung 11 und ragt abschnittsweise in beide Kammern 12, 13 hinein. Der Durchmesser des Verbindungsgliedes 20 ist wesentlich kleiner als der Durchmesser der Austrittsöffnung 11. Das Masseteil 18 ist in der dem Austritt 10 zugekehrten Kammer 12 und das Schließteil 19 in der darunterliegenden Kammer in gewissem Umfang freibeweglich angeordnet. Die das Masseteil 18 aufnehmende Kammer 12 weist einen wesentlich größeren Durchmesser und ein größeres Volumen auf als die Kammer 13. Angrenzend an die Austrittsöffnung 11 weist die Kammer 12 einen kalottenförmigen Bereich 35 auf, wogegen der dem Austritt 10 zugewandte Abschnitt der Kammer 12 etwa zylindrisch ausgebildet ist.

An der Innenseite der Kammer 12 sind im kalottenförmigen Bereich 35 benachbart der Austrittsöffnung 11 mehrere sternförmig zueinander angeordnete Führungsrippen 21 angeordnet, auf denen das Masseteil 18 aufliegt. Eine obere Begrenzungskante 22 der Führungsrippen 21 ist an die äußere Gehäusewand angeschlossen und verläuft unter einem Winkel zu einer Vertikalebene A-A, wobei der Winkel vorzugsweise 45° beträgt. Der Vertikalebene A-A zugekehrte Endbereich 23 der Führungsrippen 21 verlaufen etwa parallel zu dieser und in der Draufsicht gesehen auf einem Kreisbogen, der einen größeren Durchmesser aufweist als die Austrittsöffnung 11. Die das Schließteil 19 aufnehmende Kammer 13 ist annähernd zylindrisch ausgebildet, wobei der Innendurchmesser dieser Kammer wesentlich kleiner ist als der Innendurchmesser der Kammer 12. Innerhalb der Kammer 13 sind sternförmig angeordnete Rippen 24 zur Führung des Schließteiles 19 vorgesehen. Die von der Gehäusewand nach innen ragenden Rippen 24 erweitern sich von unten nach oben hin kegelförmig, wodurch sich der Raum für das Schließteil 19 zur Austrittsöffnung 11 hin kegelförmig verjüngt. Zwischen den beiden Kammern 12 und 13 ist eine die Austrittsöffnung 11 enthaltende Trennwand 25 vorgesehen, die auf der dem Masseteil 18 zugekehrten Seite kalottenförmig ausgebildet ist. Nach unten hin setzt sich die Trennwand 25 aus zwei winkelig aneinandergesetzten Abschnitten 26, 27 zusammen, wobei der an die Austrittsöffnung 11 angrenzende Abschnitt 26 eine kegelförmige Dichtfläche 28 bildet, die der Austrittsöffnung 11 vorgelagert ist.

Gemäß Fig. 2 sind sowohl das Masseteil 19 als auch das Schließteil 19 kugelförmig ausgebildet. Es besteht jedoch auch die Möglichkeit, das Masseteil 18 und gegebenenfalls auch das Schließteil 19 kegelförmig oder dergleichen auszubilden. Das Masseteil 18 ist aus einem Werkstoff mit einem relativ hohen spezifischen Gewicht hergestellt, z.B. aus rostfreiem Stahl, wogegen das Schließteil 19 aus einem leichtgewichtigen Werkstoff wie Kunststoff gefertigt ist. Der Durchmesser des Masseteils 18 ist zwei- bis fünfmal, vorzugsweise etwa viermal so groß wie der Durchmesser des Schließteiles 19.

Das Verbindungsglied 20 ist einstückig mit dem Schließteil 19 ausgebildet und nimmt an seinem freien Ende 29 das Masseteil 18 auf. Hierzu ist am Masseteil 18 eine Durchgangsbohrung 30 vorgesehen, durch die das Verbindungsglied 20 hindurchgeführt wird. Das Masseteil 18 liegt unten auf einem Kragen 31 des Verbindungsgliedes 20 auf und weist oben eine Querschnittserweiterung 32 (Verquetschung des Verbindungsgliedes 20) auf, welche mit einer kegelförmigen Anfasung 34 des Masseteils 18 formschlüssig zusammenwirkt. Eine Mittelachse 36 des Verbindungsgliedes 20 verläuft auf einer Hilfsebene C-C, die die Mittelpunkte M1, M2 von Masseteil 18 und Schließteil 19 miteinander verbindet.

In Normallage N des Fahrzeuges liegt das Masseteil 18 auf den Führungsrippen 21 der obenliegenden Kammer 12 auf und die Kraftstoffdämpfe gelangen durch die Kammer 13 und die Austrittsöffnung 11 in die Durchströmkanäle 33, die sich zwischen den Führungsrippen 21 erstrecken. Nach Passieren der Durchströmkanäle 33 strömen die Kraftstoffdämpfe seitlich am Masseteil 18 vorbei nach oben hin zum Austritt 10 des Gehäuses 8. Da das Masseteil 18 relativ schwer ausgebildet ist, kann das Schließteil 19 auch bei extremen Bedingungen (hohe Außentemperatur, Höhenlage) nicht infolge verstärkter Vergasung des Kraftstoffes nach oben gegen die Dichtfläche 28 der Austrittsöffnung 11 gedrückt werden. Bei Schräglage S1 bzw. S2 oder Kopflage K des Fahrzeugs wird hingegen das Schließteil 19 durch das Gewicht des Masseteils 18 gegen die Austrittsöffnung 11 gezogen und verschließt diese wirksam, so daß kein Kraftstoff ins Freie oder den Aktivkohlefilter 6 austreten kann.

**Patentansprüche**

1. Verschlußvorrichtung (7) für eine Lüftungsleitung (5) eines Kraftstoffbehälters (4), die ein Gehäuse (8) mit einem Zugang (9) und einem Austritt (10) sowie eine Schließeinrichtung (17) umfaßt und in Abhängigkeit von der Fahrzeuglage betätigt wird und bei der die Schließeinrichtung (17) aus einem Masseteil (18) und einem mit diesem zusammenwirkenden Schließteil (19) besteht, das eine Austrittsöffnung (11) bei Schräglage des Fahrzeuges verschließt, wobei innerhalb des Gehäuses (8) zwei übereinanderliegende Kammern (12, 13) vorgesehen sind, die über die Austrittsöffnung (11) miteinander verbunden sind, wobei in der einen Kammer (12) das Masseteil (18) und in der anderen Kammer (13) das Schließteil (19) in gewissem Umfang frei beweglich angeordnet ist und daß sich zwischen dem Masseteil (18) und dem Schließteil (19) ein stabartiges Verbindungsglied (20) erstreckt, welches die Austrittsöffnung (11) durchdringt und abschnittsweise in beide Kammern (12, 13) hineinragt und einerseits mit dem Masseteil (18) und andererseits mit dem Schließteil (19) verbunden ist, dadurch gekennzeichnet, daß die Austrittsöffnung (11) im Verbindungsbereich von zwei übereinanderliegenden, durch das Gehäuse (8) gebildeten Kammern (12, 13) angeordnet ist, und daß die dem Austritt (10) zugekehrte, das Masseteil (18) aufnehmende Kammer (12) angrenzend an die Austrittsöffnung (11) einen kalottenförmigen Bereich (35) aufweist, an dessen Innenseite mehrere sternförmige Führungsrippen (21) vorgesehen sind, auf denen das Masseteil (18) aufliegt, wobei die der Austrittsöffnung (11) zugekehrten Endbereiche (23) der Führungsrippen (21) etwa parallel zu einer Vertikalebene (A-A) und mit radialen Abstand (13) zur Austrittsöffnung (11) verlaufen.

2. Verschlußvorrichtung nach Anspruch 1, dadurch gekennzeichnet, daß eine obere Begrenzungskante (22) der Führungsrippen (21) unter einem Winkel (α) zu der Vertikalebene (A-A) verläuft, wobei der Winkel (α) vorzugsweise 45° beträgt.

3. Verschlußvorrichtung nach Anspruch 1, dadurch gekennzeichnet, daß die das Schließteil (19) aufnehmende Kammer (13) etwa zylindrisch ausgebildet ist und einen wesentlich kleineren Durchmesser aufweist als die darüberliegende Kammer (12).

4. Verschlußvorrichtung nach Anspruch 3, dadurch gekennzeichnet, daß an der Kammer (13) unterhalb der Austrittsöffnung (11) sternförmig angeordnete Rippen (24) zur Führung des Schließteiles (19) vorgesehen sind.

5. Verschlußvorrichtung nach Anspruch 4, dadurch gekennzeichnet, daß sich die Rippen (24) zu einer der Austrittsöffnung (11) vorgelagerten Dichtfläche (28) hin kegelförmig von unten nach oben erweitern.

6. Verschlußvorrichtung nach Anspruch 1, dadurch gekennzeichnet, daß die Austrittsöffnung (11) an einer zwischen den beiden Kammern (12, 13) angeordneten Trennwand (25) vorgesehen ist.

7. Verschlußvorrichtung nach Anspruch 1, dadurch gekennzeichnet, daß sowohl das Masseteil (18) als auch das Schließteil (19) kugelförmig ausgebildet sind.

8. Verschlußvorrichtung nach den Ansprüchen 1 und 7, dadurch gekennzeichnet, daß der Durchmesser des Masseteils (18) etwa zwei- bis fünfmal, vorzugsweise viermal so groß ist wie der Durchmesser des Schließteiles (19).

9. Verschlußvorrichtung nach Anspruch 1, dadurch gekennzeichnet, daß das Masseteil (18) aus einem Werkstoff mit hohem spezifischem Gewicht hergestellt ist.

10. Verschlußvorrichtung nach Anspruch 1, dadurch gekennzeichnet, daß das Schließteil (19) aus Kunststoff gefertigt ist.

11. Verschlußvorrichtung nach Anspruch 1, dadurch gekennzeichnet, daß das Verbindungsglied (20) einstückig mit dem Schließteil (19) ausgebildet ist.

12. Verschlußvorrichtung nach Anspruch 1, dadurch gekennzeichnet, daß das Masseteil (18) auf einem Kragen (31) des Verbindungsgliedes (20) aufliegt und daß ein durch eine Durchgangsbohrung (30) des Masseteils (18) hindurchgeführter Abschnitt des Verbindungsgliedes (20) an seinem freien Ende eine Querschnittserweiterung (32) aufweist, die mit einer Anfasung (34) des Masseteils (18) formschlüssig zusammenwirkt.

**Revendications**

1. Dispositif d'obturation (7) pour une conduite d'aération (5) d'un réservoir de carburant (4), qui comprend un carter (8) avec un accès (9) et une sortie (10), ainsi qu'un dispositif d'obturation (17) et qui est actionné en fonction de la position du véhicule et dans lequel le dispositif d'obturation (17) se compose d'une partie massive (18) et d'une partie d'obturation (19) coopérant avec celle-ci, qui obture une ouverture de sortie (11) dans le cas de position inclinée du véhicule, où, à l'intérieur du carter (8), sont prévues deux chambres (12, 13) superposées qui sont reliées par l'ouverture de sortie (11), la partie massive (18) étant disposée dans une chambre (12) et la partie d'obturation (19) étant disposée dans l'autre chambre (13) et étant mobile librement dans une certaine mesure, un organe de liaison (20) en forme de tige s'étendant entre la partie massive (18) et la partie d'obturation (19) de manière à traverser l'ouverture de sortie (11) et pénétrer en partie dans les deux chambres (12, 13) et pour être d'une part relié à la partie massive (18) et d'autre part à la partie d'obturation (19), caractérisé en ce que l'ouverture de sortie (11) est disposée dans la zone de liaison des deux chambres (12, 13) formées par le carter (8) et que la chambre (12) qui est tournée vers la sortie (10) et qui loge la partie massive (12) présente limitrophe à l'ouverture de sortie (11) une zone (35) en forme de calotte, sur la face intérieure de laquelle sont prévues plusieurs nervures de guidages (21) en forme d'étoile, sur lesquelles appuie la partie massive (18), où les zones d'extrémité (23), tournées vers l'ouverture de sortie (11), des nervures de guidage (21) s'étendent à peu près parallèlement à un plan vertical (A-A) et à distance radiale (13) de l'ouverture de sortie (11).

2. Dispositif d'obturation selon la revendication 1, caractérisé en ce qu'une arête de délimitation supérieure (22) des nervures de guidage (21) s'étend en faisant un angle (α) par rapport au plan vertical (A-A), l'angle (α) étant de préférence de 45°.

3. Dispositif d'obturation selon la revendication 1, caractérisé en ce que la chambre (13) qui loge la partie d'obturation (19) est à peu près cylindrique et présente un diamètre sensiblement inférieur à la chambre (12) disposée au-dessus.

4. Dispositif d'obturation selon la revendication 3, caractérisé en ce que des nervures (24) sont disposées en forme d'étoile, sur la chambre (13), au-dessous de l'ouverture de sortie (11), pour le guidage de la partie d'obturation (19).

5. Dispositif d'obturation selon la revendication 4, caractérisé en ce que les nervures (24) s'élargissent en forme de cône, de bas en haut, en formant une surface d'étanchéité (28) disposée en amont de l'ouverture de sortie (11).

6. Dispositif d'obturation selon la revendication 1, caractérisé en ce que l'ouverture de sortie (11) est prévue sur une paroi de séparation (25) disposée entre les deux chambres (12, 13).

7. Dispositif d'obturation selon la revendication 1, caractérisé en ce que tant la partie massive (18) que la partie d'obturation (19) sont de forme sphérique.

8. Dispositif d'obturation selon les revendications 1 et 7, caractérisé en ce que le diamètre de la partie massive (18) est à peu près du double au quintuple, de préférence du quadruple, du diamètre de la partie d'obturation (19).

9. Dispositif d'obturation selon la revendication 1, caractérisé en ce que la partie massive (18) est fabriquée en un matériau de poids spécifique élevé.

10. Dispositif d'obturation selon la revendication 1, caractérisé en ce que la partie d'obturation (19) est fabriquée en matière plastique.

11. Dispositif d'obturation selon la revendication 1, caractérisé en ce que l'organe de liaison (20) est réalisé d'une seule pièce avec la partie d'obturation (19).

12. Dispositif d'obturation selon la revendication 1, caractérisé en ce que la partie massive (18) prend appui sur une collerette (31) de l'organe de liaison (20) et qu'une section, passant par un alésage de passage (30) de la partie massive (18), de l'organe de liaison (20) présente à son extrémité libre un élargissement de sa section transversale, qui coopère par ajustement de forme avec un chanfrein (34) de la partie massive (18).

## Claims

1. Closing apparatus (7) for a ventilation duct (5) of a fuel tank (4), comprising a housing (8) with an inlet (9), an outlet (10) and a closing device (17) and operating according to the position of the vehicle, and in which the closing device (17) comprises a main part (18) and a closing part (19) co-operating therewith and closing an outlet opening (11) when the vehicle is on an incline, two chambers (12, 13) being provided one above the other inside the housing (8) and being interconnected via the outlet opening (11), the main part (18) being arranged in one chamber (12) and the closing part (19) in the other chamber (13) so as to be freely movable to a certain extent and in such a way that a rod-shaped connecting member (20) extends between the main part (18) and the closing part (19) and penetrates the outlet opening (11) and partially projects into both chambers (12, 13) and is connected both with the main part (18) and with the closing part (19), characterised in that the outlet opening (11) is arranged in the connecting region of two chambers (12, 13) positioned one above the other and formed by the housing (8); and in that the chamber (12) which faces the outlet (10) and contains the main part (18) has a cup-shaped region (35) bordering the outlet opening (11), on the interior of which region several radial guiding ribs (21) are provided on which the main part (18) rests, the end regions (23) — facing the outlet opening (11) — of the guiding ribs (21) running approximately parallel to a vertical plane (A-A) and at a radial distance (13) from the outlet opening (11).

2. Closing apparatus according to claim 1, characterised in that an upper boundary edge (22) of the guiding ribs (21) extends at an angle (α) to the vertical plane (A-A), wherein the angle (α) is preferably 45°.

3. Closing apparatus according to claim 1, characterised in that the chamber (13) containing the closing part (19) is of approximately cylindrical shape and has a substantially smaller diameter than the chamber (12) positioned thereabove.

4. Closing apparatus according to claim 3, characterised in that ribs (24), arranged radially in the chamber (13) below the outlet opening (11), are provided to guide the closing part (19).

5. Closing apparatus according to claim 4, characterised in that the ribs (24) expand conically upwards from below towards a sealing surface (28) mounted in front of the outlet opening (11).

6. Closing apparatus according to claim 1, characterised in that the outlet opening (11) is provided in a partition (25) between the two chambers (12, 13).

7. Closing apparatus according to claim 1, characterised in that both the main part (18) and the closing part (19) are spherically shaped.

8. Closing apparatus according to claims 1 and 7, characterised in that the diameter of the main part (18) is approximately two to five times, preferably four times as large as the diameter of the closing part (19).

9. Closing apparatus according to claim 1, characterised in that the main part (18) is manufactured from a material with a high specific gravity.

10. Closing apparatus according to claim 1, characterised in that the closing part (19) is manufactured from synthetic material.

11. Closing apparatus according to claim 1, characterised in that the connecting member (20) and the closing part (19) are formed as one piece.

12. Closing apparatus according to claim 1, characterised in that the main part (18) rests on a collar (31) of the connecting member (20), and in that a portion of the connecting member (20), guided through a passage-hole (30) in the main part (18), has at its free end a cross-section expansion (32) co-operating in a positive-locking way with a chamfer in the main part (18).

FIG.1

FIG.3

FIG.2

FIG.4

FIG.5